# FASCICULE DE BREVET EUROPEEN

(11) **EP 1 595 771 B1**
(45) Date de publication et mention de la délivrance du brevet: **29.08.2007**
(21) Numéro de dépôt: 05300342.2
(22) Date de dépôt: 29.04.2005
(51) Int. Cl.: B62D 25/24, B62D 25/08

(54) **Clapet d'obturation pour boîte à eau de véhicule automobile et boîte à eau correspondante**
Absperrventil für den Wasserkasten eines Kraftfahrzeuges, und solch ein Wasserkasten
Valve for the cowl of an automobile, and corresponding cowl

(30) Priorité: 12.05.2004 FR 0405144
(43) Date de publication de la demande: 16.11.2005
(73) Titulaire: RENAULT s.a.s., 92100 Boulogne Billancourt (FR)
(72) Inventeur: Letocart, Guillaume, 78114 Magny Les Hameaux (FR); Ben Mohamed, Mohamed, 92290 Chatenay Malabry (FR)

(56) Documents cités:
- EP-A- 0 888 954
- DE-C- 4 313 783
- PATENT ABSTRACTS OF JAPAN vol. 1999, no. 09, 30 juillet 1999 (1999-07-30) & JP 11 091633 A (HINO MOTORS LTD), 6 avril 1999 (1999-04-06)
- PATENT ABSTRACTS OF JAPAN vol. 0091, no. 76 (M-398), 20 juillet 1985 (1985-07-20) & JP 60 045482 A (NISSAN JIDOSHA KK; others: 01), 11 mars 1985 (1985-03-11)

## Description

L'invention concerne un clapet d'obturation pour une boîte à eau de véhicule automobile et une boîte à eau pourvue d'un tel clapet.

L'invention concerne plus particulièrement un clapet d'obturation pour une boîte à eau située sous les essuie-glaces avant d'un véhicule. Cette boîte à eau est en général placée devant le pare brise sous une grille d'auvent située dans le prolongement du capot avant. La boîte comporte une entrée d'air destinée au bloc de climatisation lequel est situé derrière une cloison pare feu dans la planche de bord. Elle a également pour fonction de récupérer l'eau venant de l'extérieur et de l'évacuer vers le sol ou les ailes du véhicule.

Dans le document DE-4315094, un simple orifice permet d'évacuer l'eau de la boîte à eau et d'éviter qu'elle ne pénètre dans la conduite d'air menant au bloc de climatisation. Un tel agencement favorise toutefois la remontée des odeurs et du bruit du compartiment moteur vers le bloc de climatisation et l'habitacle du véhicule.

Une autre solution consiste à relier un orifice prévu dans le fond de la boîte à eau à un tuyau qui traverse le compartiment moteur. Ce tuyau généralement souple, en caoutchouc, est fixé sur la boîte à eau et son extrémité libre est pourvue d'un clapet maintenu fermé par son élasticité qui s'ouvre sous l'effet du poids de l'eau. La fermeture du clapet est en outre facilitée par la dépression formée par le fonctionnement du bloc de climatisation.

Toutefois, cet agencement présente plusieurs inconvénients. Ce tuyau souple traversant le compartiment moteur favorise également la remontée des odeurs et du bruit vers l'habitacle du véhicule. Par ailleurs, cet agencement est difficilement compatible avec certains véhicules de petite taille. En effet, la boîte à eau doit pouvoir être démontée pour certaines opérations de maintenance mais l'espace réduit disponible rend parfois très difficile, voire impossible, de démonter et remonter correctement les tuyaux habituellement utilisés sur la boîte à eau.

Un example de l'art antérieure est le document EP0888954, qui divulgue un clapet d'évacuation d'une boîte à eau comprenant un corps creux avec moyens de fixation, une bague souple d'étanchéité et un volet d'obturation; ceci est venu de matière dans un corps monobloc.

L'invention vise à pallier ces inconvénients en proposant un clapet d'obturation de boîte à eau permettant d'évacuer l'eau par un orifice d'évacuation de la boîte à eau vers un système de récupération solidaire du véhicule et de fermer cet orifice en absence d'eau. Cette évacuation est réalisée de manière étanche et simple selon l'invention. Avantageusement, le clapet d'obturation limite la remontée du bruit et ' des odeurs du compartiment moteur vers l'habitacle du véhicule lorsque la boîte à eau est reliée au bloc de climatisation.

A cet effet, l'objet de l'invention concerne un clapet d'obturation de boîte à eau de véhicule automobile, la boîte à eau étant formée d'un boîtier rigide et étanche recouvert d'un matériau isolant et pourvu d'un orifice d'évacuation d'eau, caractérisé en ce qu'il comprend :
- un corps creux sensiblement cylindrique apte à être introduit dans l'orifice, et fixé dans celui-ci par des moyens de fixation, le corps creux comportant une bouche interne d'évacuation d'eau,
- une bague souple d'étanchéité montée de manière étanche autour d'une extrémité du corps creux, pourvue d'au moins deux lèvres d'étanchéité, destinées à assurer l'étanchéité avec le boîtier rigide et le matériau isolant respectivement, et
- un volet d'obturation pourvu d'une masse, articulé par rapport à la bouche interne et apte à venir en appui étanche contre le bord périphérique aval de la bouche interne.

L'étanchéité du clapet est assurée d'une part par les lèvres d'étanchéité de la bague souple et d'autre part par le volet d'obturation dont la masse permet d'assurer la fermeture par gravité. A cet effet, dans sa position d'utilisation, le corps creux est orienté de sorte que la charnière du volet soit située sur sa partie supérieure. Un système de récupération d'eau, tel qu'un tuyau, peut alors être placé sous l'ouverture du clapet pour récupérer l'eau évacuée. Le système d'évacuation d'eau peut alors être fixé sur la carrosserie, la boîte à eau étant démontable indépendamment du système d'évacuation, au bénéfice de la facilité de maintenance du véhicule. De plus, une lèvre assurant l'étanchéité avec le boîtier rigide de la boîte à eau et l'autre avec le matériau isolant, l'eau ne peut s'infiltrer entre le boîtier et le matériau isolant de sorte que l'intégrité de ce dernier est préservée.

De préférence, le volet est formé d'une pièce avec la bague, par exemple par moulage.

De préférence encore, le corps creux est pourvu d'au moins une fente longitudinale s'étendant sur toute sa longueur, située sensiblement diamétralement opposée à l'articulation du volet sur la bague. Cette fente est donc destinée à être située à l'intérieur de la boîte à eau. Elle est alors située sur la partie inférieure du clapet dans sa position d'utilisation, et permet l'évacuation de faibles volumes d'eau. Cette disposition limite ainsi les risques de formation d'eau stagnante dans la boîte à eau.

Avantageusement, le corps creux présente au moins une rainure ou nervure d'indexage sur sa surface externe, ou au moins une fente d'indexage, s'étendant sur toute sa longueur et apte à coopérer avec une saillie ou une encoche correspondante de l'orifice de la boîte à eau. Cette caractéristique permet de faciliter le montage du clapet dans l'orifice et d'éviter toute erreur de montage.

De préférence, le bord périphérique de la bouche interne, sur lequel le volet vient en appui étanche, s'étend dans un plan incliné par rapport à un plan perpendiculaire à l'axe du corps creux de manière à ce que la partie du bord diamétralement opposée à l'articulation du volet soit distante de la bague, tandis que la partie du bord adjacente à cette articulation soit proche de la bague. Le corps creux peut ainsi être monté dans une position inclinée alors que le volet du clapet reste dans un plan sensiblement vertical en position fermée. Ce type d'agencement permet d'adapter le clapet sur une boîte à eau dont l'orifice d'évacuation est proche d'un fond incliné (pour favoriser l'écoulement de l'eau) sans empêcher la fermeture du volet par gravité.

De préférence, le corps creux et la bague souple sont distincts et pourvus de moyens d'accrochage complémentaires. La bague souple peut toutefois être fixée par collage sur le corps creux, ou par surmoulage, ....

Avantageusement, le corps creux est pourvu d'une collerette de butée saillant radialement vers l'extérieur à proximité du bord périphérique aval de la bouche interne, et une face d'appui de la bague souple est en appui sur la collerette de butée du côté des moyens de fixation lorsque la bague est montée autour du corps creux. Cet agencement permet d'obtenir une bonne étanchéité entre la bague souple et le corps creux.

Avantageusement, le bord de la collerette est pourvu, du côté opposé à l'articulation du volet, d'une surface saillant sensiblement axialement du côté opposé aux moyens de fixation. Cette surface forme une sorte de bec verseur qui permet de diriger l'écoulement de l'eau vers un système de récupération, tel qu'un tuyau situé sous le clapet.

L'invention concerne également une boîte à eau pour véhicule automobile, formée d'un boîtier rigide recouvert d'un matériau isolant pourvu dans sa partie inférieure d'un orifice d'évacuation d'eau, caractérisée en ce qu'elle est pourvue d'un clapet d'obturation selon l'invention, le clapet étant fixé de sorte que la bague souple soit en appui contre l'extérieur de la boîte à eau, une première lèvre d'étanchéité étant en appui contre le matériau isolant, une deuxième lèvre étant en appui contre le boîtier rigide, et que l'articulation du volet soit située dans la partie supérieure du clapet afin que le poids du volet le maintienne en appui étanche contre le bord périphérique du clapet en absence d'eau dans le boîtier. Dans une telle position, le volet s'étend dans une position sensiblement verticale, ou proche de la verticale. Un système de récupération d'eau, tel qu'un tuyau rigide ou semi-rigide solidaire du véhicule, peut alors être placé sous le clapet afin de récupérer l'eau d'évacuation. L'invention concerne plus particulièrement une boîte à eau du type comportant un orifice d'alimentation en air pour un système de climatisation, sans toutefois s'y limiter. Le clapet selon l'invention, situé directement sur la boîte permet alors de réduire notablement le déplacement des odeurs et du bruit du compartiment moteur vers l'habitacle du véhicule.

L'invention est maintenant décrite en référence aux dessins annexés, non limitatifs, dans lesquels :
- la figure 1 est une vue éclatée en perspective d'un premier mode de réalisation d'un clapet selon l'invention ;
- la figure 2 est une vue en coupe de la bague souple du clapet de la figure 1;
- la figure 3 est une représentation en coupe d'un autre mode de réalisation du clapet;
- la figure 4 est une vue de dessus du mode de réalisation de la figure 3, la bague souple étant représentée en coupe ;
- la figure 5 est une vue partiellement en coupe d'une boîte à eau équipée du clapet représenté sur les figures 3 et 4.

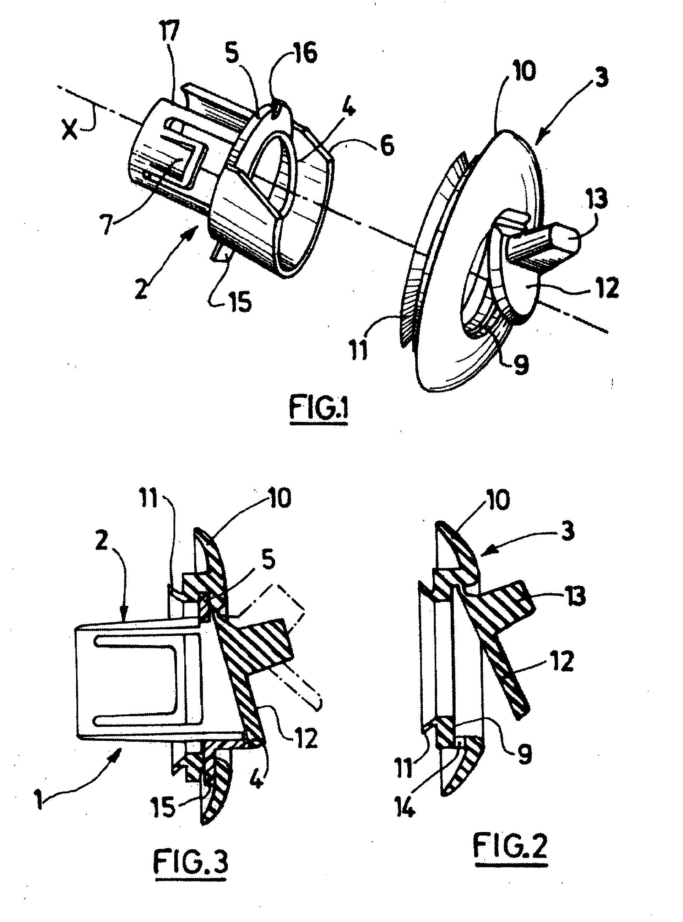

Un clapet 1 selon l'invention est décrit en référence aux figures 1 à 4.

Le clapet 1 est formé d'un corps creux 2 et d'une bague souple d'étanchéité 3. Dans cet exemple, le corps et la bague sont distincts, le corps étant dans un matériau rigide. On peut toutefois envisager que le corps et la bague soient réalisés d'une pièce dans une ou plusieurs matières.

Le corps creux rigide 2, qui présente une forme sensiblement cylindrique d'axe X, est pourvu d'une bouche interne d'évacuation d'eau présentant à une extrémité un bord périphérique aval 4, dans le sens de l'écoulement de l'eau. Sur sa face externe, à proximité du bord périphérique aval 4, une collerette de butée 5 est aménagée sur le corps 2. Cette collerette 5 fait saillie radialement du corps creux vers l'extérieur de ce dernier, sur toute sa périphérie. Le bord libre de la collerette 5 est pourvu, sur une partie de sa périphérie d'une surface de versement 6 saillant axialement du même côté que le bord périphérique aval 4 de la bouche interne. Dans le mode de réalisation représenté sur les figures 3 à 5, cette surface de versement 6 a été supprimée.

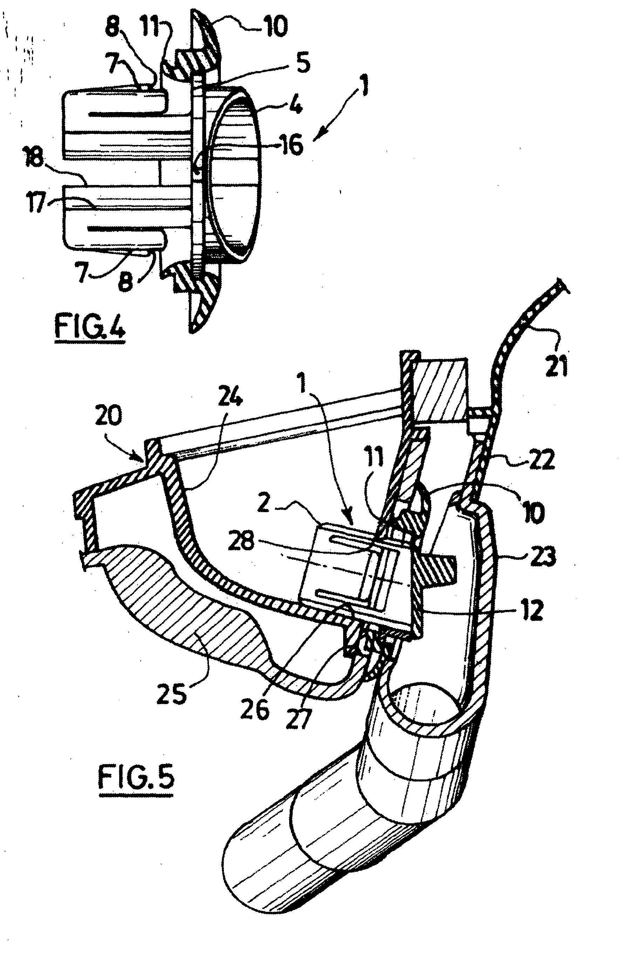

Le corps creux 2 présente sur ses parois latérales des moyens de fixation 7. Dans l'exemple, il s'agit de clips 7 saillant vers l'extérieur du corps creux et présentant une surface de butée 8 sensiblement parallèle à la collerette 5 et en regard de celle-ci. Deux clips diamétralement opposés sont prévus (figure 4), dont un seul est visible sur la figure 1.

La bague souple 3 présente une forme d'anneau plat d'axe X dont une surface latérale sert de face d'appui 9 destinée à venir en appui contre la collerette 5 du côté des moyens de fixation 7. De ce même côté, le bord externe de l'anneau présente une première lèvre annulaire d'étanchéité 10. Cette lèvre 10 fait saillie sensiblement radialement vers l'extérieur de l'anneau, son bord libre étant dirigé vers les moyens de fixation 7. Sur son autre face, le long de son bord interne, l'anneau est pourvu d'une deuxième lèvre annulaire d'étanchéité 11 faisant saillie en s'évasant vers les moyens de fixation 7.

Un volet d'obturation 12, pourvu d'une masse 13, est monté articulé sur la première lèvre d'étanchéité 10, à proximité de la face d'appui 9. La masse 13 est située sur la face du volet dirigée du côté opposé à la face d'appui 9. Le volet 12 et sa masse 13 sont moulés en une seule pièce avec le reste de la bague souple 3, la charnière entre le volet et la bague étant formée d'une mince bande de matière souple. Le volet 12 présente une dimension suffisante pour pouvoir venir en appui contre le bord périphérique aval 4 du corps creux situé à proximité de la collerette, ceci lorsque la bague souple 3 est montée sur le corps creux 2. Le volet 12 est alors articulé par rapport à la bouche interne. Dans les exemples représentés, le bord périphérique 4 s'étend dans un plan incliné par rapport au plan de la collerette (plan perpendiculaire à l'axe X) de manière à être situé sensiblement dans le plan de la collerette du côté de l'articulation du volet et à s'éloigner de ce dernier du côté diamétralement opposé à cette articulation (figures 1, 3, 4).

Afin d'assurer sa fixation sur le corps creux 2, la bague souple 3 est pourvue d'un orifice 14 situé entre la première lèvre 10 et la face d'appui 9, à l'opposé de l'articulation du volet tel que représenté figures 2 et 3. Cet orifice est apte à coopérer avec une patte 15 correspondante, saillant radialement de la collerette 5. Une encoche 16 prévue sur la collerette 5 et diamétralement opposée à la patte 15, permet également d'assurer la fixation de la bague souple, cette encoche 16 étant destinée à coopérer avec une nervure correspondante de la bague (non représentée) située entre la face d'appui 9 et le volet 12. Ces différents éléments forment des moyens d'accrochage de la bague sur le corps creux. Ils permettent également un montage correct de la bague sur le corps creux.

Lorsque la bague 3 est montée sur le corps creux 2, sa face d'appui 9 est en appui contre la collerette 5 (du côté des moyens de fixation), le volet 12 venant en appui contre le bord périphérique aval 4 dans sa position fermée, tel que représenté figure 3.

Le corps creux est en outre pourvu de deux fentes longitudinales 17 et 18 qui s'étendent sur toute sa longueur : une première fente large supérieure 17 d'indexage, située du même côté que l'articulation du volet, et une deuxième fente étroite inférieure 18 d'évacuation, diamétralement opposée (figure 4).

De préférence, le corps creux est moulé dans une matière plastique rigide et la bague souple est moulée séparément dans une matière élastique souple, telle que l'EPDM.

Le clapet 1 décrit est destiné à être utilisé sur une boite à eau 20 de véhicule automobile du type représenté figure 5. La boîte à eau est située en avant d'une grille d'auvent 21 fixée sur la traverse inférieure du pare brise du véhicule 22. Un tuyau d'évacuation d'eau 23, de préférence en matière rigide, est également fixé sur cette traverse inférieure 22.

La boîte à eau 20 est formée d'un boîtier rigide et étanche en tôle 24 recouvert d'une couche externe de matériau isolant 25, de préférence insonorisant. Le boîtier rigide 24 est pourvu dans sa partie inférieure d'un orifice 26 d'évacuation d'eau. Le corps creux rigide 2 du clapet est conçu de manière à pouvoir être introduit dans cet orifice 26, jusqu'à ce que la deuxième lèvre 11 soit en appui sur le boîtier contre le bord externe de l'orifice. Dans cette position, les surfaces de butée 8 des clips 7 sont en appui contre le bord interne de orifice, et la bague souple 3 est en appui contre l'extérieur du boîtier. La face d'appui 9 de la bague souple 3 est alors pressée contre la collerette 5 assurant ainsi l'étanchéité avec le corps creux. Un autre orifice 27 est ménagé dans le matériau insonorisant 25 autour de l'orifice 26. Le diamètre de l'orifice 27 est supérieur à celui de l'orifice 26 de manière à permettre simultanément d'une part le contact entre la deuxième lèvre 11 et le boîtier, et d'autre part le contact entre la surface externe du matériau insonorisant et la première lèvre 10 tel que visible sur la figure 5.

Le clapet est monté de sorte que la charnière du volet 12 soit située dans la position la plus haute. Le volet s'ouvre alors aisément sous le poids de l'eau et se referme sous l'effet de son propre poids.

Dans cet exemple, en raison de l'inclinaison du fond du boîtier 24, l'axe X du corps creux 2 est incliné. L'inclinaison du bord périphérique 4 du corps creux permet de positionner le volet 12 dans un plan sensiblement vertical en position fermée. Le clapet est alors maintenu fermé en appui contre le bord périphérique aval 4 par son propre poids grâce à la présence de la masse 13. La force de fermeture du clapet peut ainsi être ajustée en choisissant une masse 13 adéquate. En raison de cette inclinaison du fond du boîtier, et du corps creux, il se produit rapidement une accumulation d'eau suffisante au niveau de l'orifice 26 pour provoquer l'ouverture du volet 12 et l'écoulement de l'eau dans le tuyau 23. Par ailleurs, la présence de la fente étroite inférieure 18 permet d'éviter la stagnation d'eau dans le fond du boîtier.

En raison de son inclinaison, la partie inférieure du bord périphérique aval 4 forme une avancée formant un goulot, favorisant l'écoulement de l'eau directement dans le tuyau. L'écoulement de l'eau le long des parois externes du clapet est ainsi limité, ce qui limite le contact entre l'eau et le matériau isolant. La surface de versement 6 représentée figure 1 a également cette fonction. Afin d'éviter tout contact entre l'eau et le matériau isolant, le tuyau 23 peut être placé de panière à ce que le bord de son ouverture soit en contact contre la première lèvre d'étanchéité 10. Ou encore, une lèvre d'étanchéité supplémentaire peut être prévue à cet effet sur la bague souple ou bien sur le bord du tuyau.

Le bord de l'orifice 26 du boîtier est pourvu d'au moins une saillie 28 correspondant à la largeur d'une des fentes 17, 18. Cet agencement permet un montage rapide et sans erreur du clapet dans l'orifice avec un positionnement correct du volet. Cette saillie est de préférence située sur la partie supérieure de l'orifice afin de coopérer avec la fente supérieure 17 d'indexage et de ne pas gêner l'écoulement d'eau stagnante par la fente inférieure 18, tel que visible sur la figure 5. La différence de largeur des deux fentes permet d'éviter toute erreur de montage du clapet. A la place de la fente et de la saillie, on peut prévoir une ou plusieurs nervures ou rainures d'indexage sur la face externe du corps creux coopérant respectivement avec des rainures ou nervures de l'orifice 26.

## Revendications

1. Clapet d'obturation (1) de boîte à eau de véhicule automobile, la boîte à eau étant formée d'un boîtier (24) rigide et étanche recouvert d'un matériau isolant (25) et pourvu d'un orifice (26) d'évacuation d'eau, **caractérisé en ce qu'**il comprend :
- un corps creux (2) sensiblement cylindrique apte à être introduit dans l'orifice (26), et fixé dans celui-ci par des moyens de fixation (7), le corps creux comportant une bouche interne d'évacuation d'eau,
- une bague souple d'étanchéité (3) montée de manière étanche autour d'une extrémité du corps creux, pourvue d'au moins deux lèvres d'étanchéité (10, 11), destinées à assurer l'étanchéité avec le boîtier rigide (24) et le matériau isolant (25) respectivement, et
- un volet d'obturation (12) pourvu d'une masse (13), articulé par rapport à la bouche interne et apte à venir en appui étanche contre le bord périphérique aval (4) de la bouche interne.

2. Clapet d'obturation selon la revendication 1, **caractérisé en ce que** le volet (12) est formé d'une pièce avec la bague (3).

3. Clapet d'obturation selon la revendication 1 ou 2, **caractérisé en ce que** le corps creux est pourvu d'au moins une fente longitudinale (18) s'étendant sur toute sa longueur, située sensiblement diamétralement opposée à l'articulation du volet (12) sur la bague.

4. Clapet d'obturation selon l'une des revendications 1 à 3, **caractérisé en ce que** le corps creux présente au moins une rainure ou nervure d'indexage sur sa surface externe, ou au moins une fente d'indexage (17), s'étendant sur toute sa longueur et apte à coopérer avec une saillie (28) ou une encoche correspondante de l'orifice (26) de la boîte à eau.

5. Clapet d'obturation selon l'une des revendications 1 à 4, **caractérisé en ce que** le bord périphérique (4) de la bouche interne, sur lequel le volet (12) vient en appui étanche, s'étend dans un plan incliné par rapport à un plan perpendiculaire à l'axe du corps creux de manière à ce que la partie du bord (4) diamétralement opposée à l'articulation du volet soit distante de la bague souple, tandis que la partie du bord (4) adjacente à cette articulation soit proche de bague.

6. Clapet d'obturation selon l'une des revendications 1 à 5, **caractérisé en ce que** la bague souple (3) et le corps creux (2) sont distincts et pourvus de moyens d'accrochage complémentaires (14, 15, 16).

7. Clapet d'obturation selon la revendication 6, **caractérisé en ce que** le corps creux est pourvu d'une collerette de butée (5) saillant radialement vers l'extérieur à proximité du bord périphérique aval (4) de la bouche interne, et **en ce qu'**une face d'appui (9) de la bague souple est en appui sur la collerette de butée (5) du côté des moyens de fixation lorsque la bague (3) est montée autour du corps creux.

8. Clapet d'obturation selon la revendication 7, **caractérisé en ce que** le bord de la collerette est pourvu, du côté opposé à l'articulation du volet, d'une surface (6) saillant sensiblement axialement du côté opposé aux moyens de fixation (7).

9. Clapet d'obturation selon l'une des revendications 6 à 8, **caractérisé en ce que** le corps creux est rigide.

10. Boîte à eau (20) pour véhicule automobile, formée d'un boîtier rigide (24) recouvert d'un matériau isolant (25) pourvu dans sa partie inférieure d'un orifice d'évacuation d'eau (26), **caractérisée en ce qu'**elle est pourvue d'un clapet d'obturation (1) selon l'une des revendications précédentes, le clapet étant fixé de sorte que la bague souple (3) soit en appui contre l'extérieur de la boîte à eau, une première lèvre d'étanchéité (10) étant en appui contre le matériau isolant (25), une deuxième lèvre (11) étant en appui contre le boîtier rigide (24), et que l'articulation du volet (12) soit située dans la partie supérieure du clapet afin que le poids du volet le maintienne en appui étanche contre le bord périphérique (4) du clapet en absence d'eau dans le boîtier.

## Claims

1. Shut-off valve (1) for a water box of a motor vehicle, the water box being formed by a sealed, rigid casing (24) which is covered by an insulating material (25) and provided with a water drainage orifice (26), **characterized in that** it comprises:
- a substantially cylindrical hollow body (2) which can be introduced into the orifice (26) and fastened therein by fastening means (7), the hollow body having an internal water drainage mouth,
- a flexible sealing ring (3) mounted in a fluid-tight manner around one end of the hollow body and provided with at least two sealing lips (10, 11) which are intended to provide sealing with the rigid casing (24) and the insulating material (25) respectively, and
- a shut-off flap (12) provided with a weight (13), this flap being hinged with respect to the internal mouth and being able to bear fluid-tight against the downstream peripheral edge (4) of the internal mouth.

2. Shut-off valve according to Claim 1, **characterized in that** the flap (12) is formed in one piece with the ring (3).

3. Shut-off valve according to Claim 1 or 2, **characterized in that** the hollow body is provided with at least one longitudinal slot (18) which extends over its whole length and is situated substantially diametrically opposed to the point where the flap (12) is hinged on the ring.

4. Shut-off valve according to one of Claims 1 to 3, **characterized in that** the hollow body has at least one indexing groove or rib on its external surface, or at least one indexing slot (17), extending over its whole length and able to cooperate with a corresponding projection (28) or notch of the water box orifice (26).

5. Shut-off valve according to one of Claims 1 to 4, **characterized in that** the peripheral edge (4) of the internal mouth, over which edge the flap (12) bears fluid-tight, extends in an inclined plane with respect to a plane which is perpendicular to the axis of the hollow body, such that the part of the edge (4) that is diametrically opposed to the flap hinge point is remote from the flexible ring, while the part of the edge (4) that is adjacent to this hinge point is close to the ring.

6. Shut-off valve according to one of Claims 1 to 5, **characterized in that** the flexible ring (3) and the hollow body (2) are separate and provided with complementary coupling means (14, 15, 16).

7. Shut-off valve according to Claim 6, **characterized in that** the hollow body is provided with a stop flange (5) which projects radially outwards in the vicinity of the downstream peripheral edge (4) of the internal mouth, and **in that** a bearing face (9) of the flexible ring bears on the stop flange (5), on the fastening means side, when the ring (3) is mounted around the hollow body.

8. Shut-off valve according to Claim 7, **characterized in that** the edge of the flange is provided, on the side opposed to the flap hinge point, with a surface (6) which projects substantially axially on the side opposed to the fastening means (7).

9. Shut-off valve according to one of Claims 6 to 8, **characterized in that** the hollow body is rigid.

10. Motor vehicle water box (20) formed by a rigid casing (24) covered with an insulating material (25) and provided in its lower part with a water drainage orifice (26), **characterized in that** it is provided with a shut-off valve (1) according to one of the preceding claims, the valve being fastened such that the flexible ring (3) bears against the exterior of the water box, a first sealing lip (10) bearing against the insulating material (25), and a second lip (11) bearing against the rigid casing (24), and such that the hinge point of the flap (12) is situated in the upper part of the valve in order that the weight of the flap keeps it bearing fluid-tight against the peripheral edge (4) of the valve in the absence of water in the casing.

## Patentansprüche

1. Absperrventil (1) für den Wasserkasten eines Kraftfahrzeugs, wobei der Wasserkasten aus einem starren und dichten Gehäuse (24) besteht, das mit einem Isoliermaterial (25) bedeckt und mit einer Wasserablassöffnung (26) versehen ist, **dadurch gekennzeichnet, dass** es Folgendes aufweist:
- einen im Wesentlichen zylindrischen Hohlkörper (2), der in die Öffnung (26) eingeführt werden kann und in dieser mit Befestigungsmitteln (7) befestigt ist, wobei der Hohlkörper eine innere Wasserablassmündung aufweist,
- einen geschmeidigen Dichtring (3), der dicht um ein Ende des Hohlkörpers montiert ist, der mit mindestens zwei Dichtlippen (10, 11) versehen ist, die dazu bestimmt sind, die Abdichtung jeweils mit dem starren Gehäuse (24) und dem Isoliermaterial (25) sicherzustellen, und
- eine Absperrklappe (12), die mit einer Masse (13) versehen ist, wobei die Absperrklappe (12) in Bezug auf die innere Mündung angelenkt ist und zum dichten Aufliegen gegen den stromabwärtigen Umfangsrand (4) der Innenmündung kommen kann.

2. Absperrventil nach Anspruch 1, **dadurch gekennzeichnet, dass** das Ventil (12) aus einem Stück mit dem Ring (3) ausgebildet ist.

3. Absperrventil nach Anspruch 1 oder 2, **dadurch gekennzeichnet, dass** der Hohlkörper mit mindestens einem Längsschlitz (18) versehen ist, der sich auf seiner ganzen Länge erstreckt und im Wesentlichen zu der Anlenkung der Klappe (12) auf dem Ring diametral entgegengesetzt ist.

4. Absperrventil nach einem der Ansprüche 1 bis 3, **dadurch gekennzeichnet, dass** der Hohlkörper mindestens eine Positionierrille oder -rippe auf seiner Außenfläche aufweist oder mindestens einen Positionierschlitz (17), der sich über seine ganze Länge erstreckt und mit einem Vorsprung (28) oder einer Kerbe zusammenarbeiten kann, der/die der Öffnung (26) des Wasserkastens entspricht.

5. Absperrventil nach einem der Ansprüche 1 bis 4, **dadurch gekennzeichnet, dass** sich der Umfangsrand (4) der Innenmündung, auf dem die Klappe (12) zum dichten Aufliegen kommt, in der schiefen Ebene in Bezug auf eine Ebene senkrecht zu der Achse des Hohlkörpers so erstreckt, dass der Teil des Rands (4), der der Anlenkung der Klappe diametral entgegengesetzt ist, von dem biegsamen Ring entfernt liegt, während der Teil des Rands (4) neben dieser Anlenkung dem Ring nahe liegt.

6. Absperrventil nach einem der Ansprüche 1 bis 5, **dadurch gekennzeichnet, dass** der biegsame Ring (3) und der Hohlkörper (2) separat und mit ergänzenden Anhängmitteln (14, 15, 16) versehen sind.

7. Absperrventil nach Anspruch 6, **dadurch gekennzeichnet, dass** der Hohlkörper mit einem Anschlagkragen (5) versehen ist, der in der Nähe des stromabwärtigen Umfangsrands (4) der Innenmündung radial nach außen vorspringt, und dass eine Auflagefläche (9) des biegsamen Rings auf dem Anschlagkragen (5) auf der Seite der Befestigungsmittel aufliegt, wenn der Ring (3) um den Hohlkörper montiert wird.

8. Absperrventil nach Anspruch 7, **dadurch gekennzeichnet, dass** der Rand des Kragens auf der der Anlenkung der Klappe entgegengesetzten Seite mit einer Fläche (6) versehen ist, die im Wesentlichen axial von der Seite, die den Befestigungsmitteln (7) entgegengesetzt ist, vorsteht.

9. Absperrventil nach einem der Ansprüche 6 bis 8, **dadurch gekennzeichnet, dass** der Hohlkörper starr ist.

10. Wasserkasten (20) für Kraftfahrzeug, gebildet aus einem starren Gehäuse (24), das mit einem Isoliermaterial (25) abgedeckt ist, der in seinem unteren Teil mit einer Wasserablauföffnung (26) versehen ist, **dadurch gekennzeichnet, dass** er mit einem Absperrventil (1) nach einem der vorhergehenden Ansprüche versehen ist, wobei das Absperrventil so befestigt ist, dass der biegsame Ring (3) gegen die Außenseite des Wasserkastens anliegt, wobei eine erste Dichtlippe (10) gegen das Isoliermaterial (25) anliegt, eine zweite Dichtlippe (11) gegen das starre Gehäuse (24) anliegt und die Anlenkung der Klappe (12) sich in dem oberen Teil des Absperrventils befindet, so dass das Gewicht der Klappe sie bei Abwesenheit von Wasser in dem Gehäuse in dichter Auflage gegen den Umfangsrand (4) hält.
